# FASCICULE DE BREVET EUROPEEN

(11) **EP 2 661 352 B1**
(45) Date de publication et mention de la délivrance du brevet: **04.11.2020**
(21) Numéro de dépôt: 11802958.6
(22) Date de dépôt: 28.12.2011
(51) Int. Cl.: B29C 49/56, B29C 49/36

(54) **DISPOSITIF DE SOUFFLAGE DE RECIPIENTS**
VORRICHTUNG ZUM BLASFORMEN VON BEHÄLTERN
DEVICE FOR BLOWING CONTAINERS

(30) Priorité: 04.01.2011 FR 1150048
(43) Date de publication de la demande: 13.11.2013
(73) Titulaire: Serac Group, 72400 La Ferté Bernard (FR)
(72) Inventeur: GRAFFIN, André, Chicago, Illinois 60185 (US)
(74) Mandataire: Lavialle, Bruno François Stéphane
(86) Numéro de dépôt international: PCT/EP2011/074161
(87) Numéro de publication internationale: WO 2012/093061

(56) Documents cités:
- WO-A2-2006/111127
- DE-A1-102007 022 638
- DE-U1-202004 017 530

## Description

La présente invention concerne un dispositif de soufflage de récipients. Un tel dispositif est généralement prévu pour être implanté dans une ligne de production d'emballages destinés à contenir notamment des produits liquides.

Un dispositif de soufflage comporte généralement un bâti et une plateforme montée pour pivoter sur le bâti autour d'un axe de rotation. La plateforme est pourvue sur sa périphérie d'organes de soufflage et de moules montés sous les organes de soufflage. Le dispositif comporte en outre des moyens de commande des moules entre un état ouvert et un état fermé, un transporteur de chargement de préformes dans chacun des moules et un transporteur d'évacuation des récipients soufflés sur la plateforme. Le chargement, le soufflage et l'évacuation sont effectués dans des zones de la plateforme qui sont parcourues successivement par chaque moule au cours de la rotation de la plateforme. Les transporteurs comprennent par exemple des étoiles de transfert et/ou des transporteurs rectilignes.

Il existe des moules constitués de deux parties mobiles articulées l'une à l'autre entre une position d'ouverture du moule et une position de fermeture du moule. Le maintien en position de fermeture est assuré au moyen d'une goupille de verrouillage qui est dimensionnée pour supporter, avec l'axe d'articulation des parties de moule, les efforts de soufflage.

Il est également connu des documents WO2006/111127 et DE 20 2007 022638 des moules comportant une partie fixe et une partie mobile articulée sur la partie fixe. Les moyens de commande de la partie mobile entre les positions de fermeture et d'ouverture comprennent deux biellettes reliées l'une à l'autre pour former une genouillère assurant également le maintien de la partie mobile en position de fermeture.

Le soufflage est réalisé à une pression de plusieurs dizaines de bars, classiquement quarante bars, qui engendre des efforts importants sur les moules, les articulations et les mécanismes de maintien du moule à l'état fermé. Les moules et les mécanismes de maintien comportent donc des pièces massives pour résister à ces efforts. Ces efforts contribuent néanmoins à une usure prématurée des articulations des parties mobiles des moules et des mécanismes de maintien, usure qui rend nécessaire de prévoir des dispositifs de rattrapage des jeux. L'usure est d'autant plus importante que les moyens de maintien en position de fermeture sont complexes et comptent un nombre important d'articulations.

La complexité des moyens de maintien influe donc sur les coûts de maintenance mais contribue également à l'encombrement et la masse globale de la plateforme, augmentant l'inertie de celle-ci.

Un but de l'invention est de fournir un dispositif plus simple présentant une durée de vie plus importante.

A cet effet, on prévoit, selon l'invention, un dispositif de soufflage de récipients, comportant un bâti et une plateforme montée pour pivoter sur le bâti autour d'un axe de rotation, la plateforme étant pourvue d'organes de soufflage et de moules qui sont montés sous les organes de soufflage et qui comprennent une partie de moule fixe et une partie de moule mobile déplaçable par des moyens de commande entre une position d'ouverture et une position de fermeture de moule, caractérisé en ce qu'il comprend des organes de blocage des moules en état fermé, chaque organe de blocage comprend un arc-boutant monté sur la plateforme pour être mobile entre une position escamotée et une position de blocage dans laquelle l'arc-boutant s'étend entre la partie de moule mobile et un élément de butée solidaire de la plateforme positionné de telle manière que l'arc-boutant s'étende le long d'une direction d'application d'une résultante d'effort de soufflage repris par la partie de moule mobile.

Ainsi, l'effort de fermeture du moule est supporté par l'arc-boutant et repris par l'élément de butée qui est positionné de telle manière que l'arc-boutant et l'élément de butée soient alignés sur la direction d'application de la résultante des efforts de soufflage repris par la partie de moule mobile. L'arc-boutant est donc aligné et confondu avec la résultante des efforts de soufflage. Ceci permet une transmission maximale de l'effort de soufflage (et donc de l'effort de fermeture du moule), et directe vers l'élément de butée dont le dimensionnement peut dès lors être calculé de manière simple. Ceci permet en outre de limiter les efforts supportés par les articulations des parties de moule fixes, ce qui permet d'augmenter leur durée de vie et d'alléger leur structure.

Selon un mode de réalisation particulier, l'élément de butée est un arbre de pivotement de l'arc-boutant.

L'arbre de pivotement de l'arc-boutant travaille en cisaillement de sorte que les efforts supportés par celui-ci sont facilement calculables, simplifiant le dimensionnement de l'arbre de pivotement.

De préférence alors, la partie de moule mobile est solidaire d'un arbre de pivotement monté sur la plateforme pour pivoter entre les positions de fermeture et d'ouverture, les moyens de commande comportant une bielle reliant un maneton solidaire de l'arbre de pivotement de la partie de moule mobile et un maneton solidaire de l'arbre de pivotement de l'arc-boutant et, avantageusement, les moyens de commande comprennent un galet solidaire de l'un des manetons pour coopérer avec une came fixe par rapport au bâti et conformée pour amener la partie de moule mobile et l'arc-boutant dans leurs deux positions.

Les moyens de commande sont alors particulièrement simples et permettent, par une commande unique, un déplacement synchronisé de la partie de moule mobile et de l'arc-boutant.

Selon une caractéristique particulière, les parties de moule et l'arc-boutant sont montés dans un châssis fixé sur la plateforme.

Ainsi, le châssis va assurer la reprise des efforts de soufflage sans que ceux-ci ne soient transmis à la plateforme. Grâce au châssis, il est également constitué un module de moulage qui incorpore le moule et ses moyens de commande et qui est rapporté d'un bloc sur la plateforme. Ceci permet d'accélérer les changements de moules lors du passage de la fabrication d'une série de récipients à une autre dont les récipients ont des formes différentes.

Avantageusement, l'arc-boutant a une hauteur sensiblement identique à une hauteur du moule.

L'effort de soufflage est donc repris par l'arc-boutant sur toute la hauteur de la partie de moule fixe, répartissant l'effort de manière homogène en limitant le risque d'apparition de zones de concentration de contraintes sources d'une usure prématurée de la partie de moule mobile et / ou de l'arc-boutant.

Selon une caractéristique particulière, la partie de moule fixe est montée sur un élément de mise en appui de la partie de moule fixe contre la partie de moule mobile et, de préférence, l'élément de mise en appui comprend un corps recevant, à coulissement dans la chambre selon une direction parallèle à la direction d'application de la résultante d'effort de soufflage, un piston soumis à une pression de soufflage, la partie de moule fixe étant solidaire en translation du piston.

La partie de moule fixe est ainsi plaquée sur la partie de moule mobile et vient mettre cette dernière fermement en appui contre l'arc-boutant. Cette mise en appui est obtenue de manière simple au moyen de la pression de soufflage, étant entendu que le piston a une section telle que l'effort résultant de l'application de la pression sur celle-ci est au moins supérieur à l'effort de soufflage s'exerçant sur le moule.

D'autres caractéristiques et avantages de l'invention ressortiront à la lecture de la description qui suit d'un mode de réalisation particulier non limitatif de l'invention.

Il sera fait référence aux dessins annexés, parmi lesquels :

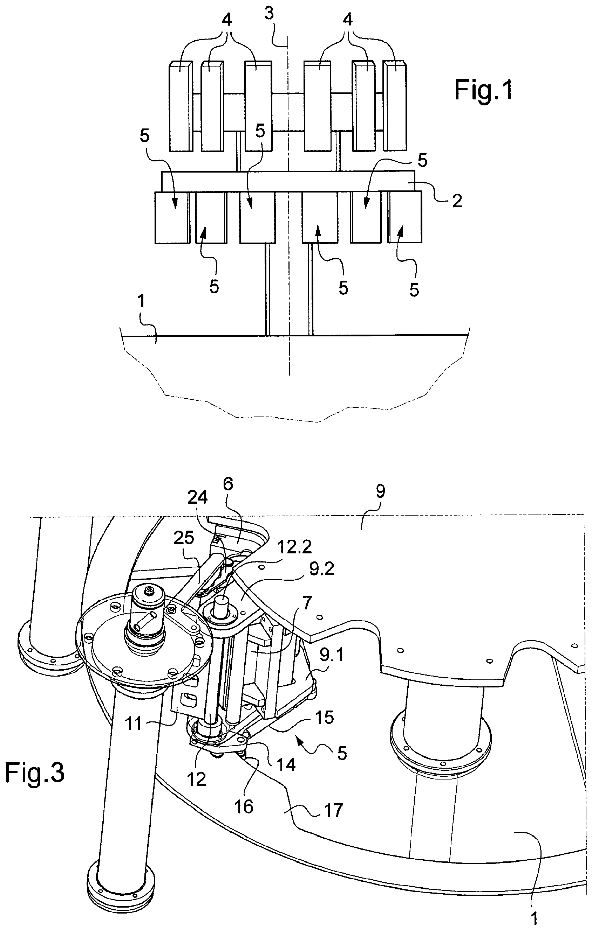

- la figure 1 est une vue schématique en élévation d'un dispositif conforme à l'invention,

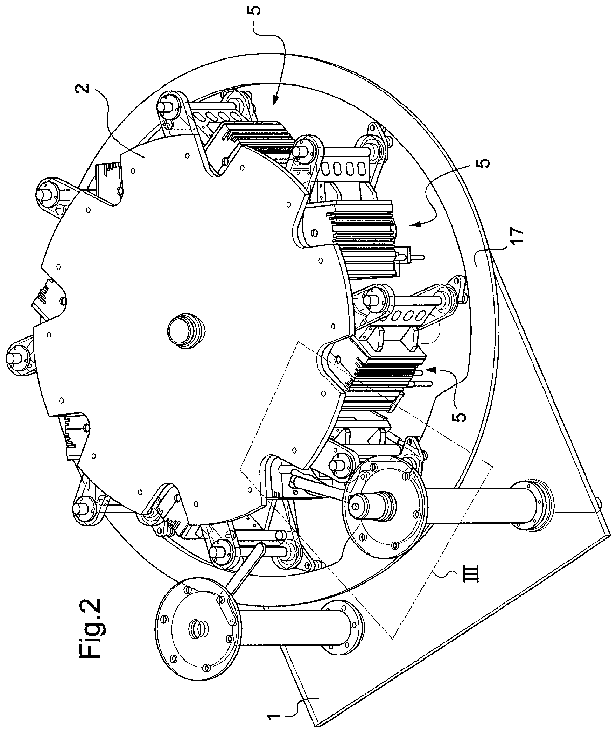

- la figure 2 est une vue schématique partielle, en perspective, de la plateforme de ce dispositif,
- la figure 3 est une vue de détail de la zone III de la figure 2,
- la figure 4 est une vue en perspective d'un bloc moule en position fermée,
- la figure 5 est une vue de dessous de ce bloc moule en position fermée,
- la figure 6 est une vue en perspective d'un bloc moule en position ouverte,
- la figure 7 est une vue de dessous de ce bloc moule en position ouverte,

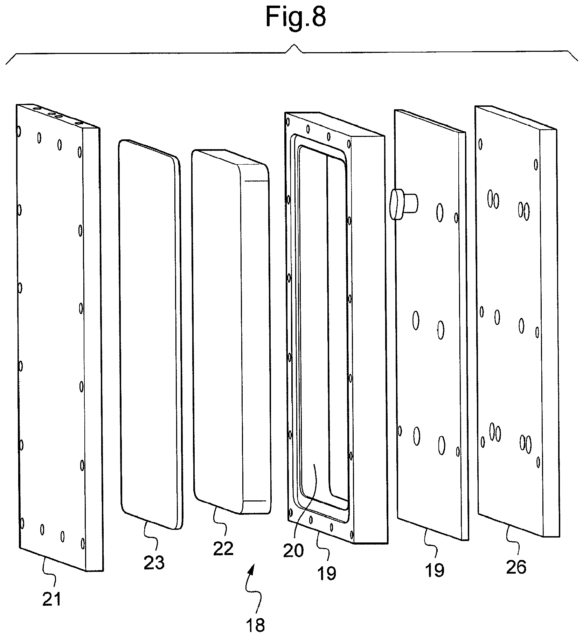

- la figure 8 est une vue schématique en perspective éclatée des moyens de mise en appui de la partie de moule fixe contre la partie de moule mobile.

Le dispositif de soufflage de récipients est ici destiné à la fabrication de bouteilles comportant un goulot fileté. Les bouteilles sont fabriquées à partir de préformes introduites dans des moules avant que de l'air ne soit soufflé à l'intérieur des préformes pour gonfler celles-ci et former le corps des bouteilles en plaquant la préforme contre la paroi du moule. Le procédé de soufflage est connu en lui-même et ne sera pas plus détaillé ici.

En référence aux figures, le dispositif de l'invention comporte un bâti 1 et une plateforme 2 montée pour pivoter sur le bâti 1 autour d'un axe de rotation 3.

La plateforme 2 est pourvue d'organes de soufflage 4 connus en eux-mêmes et de moules généralement désignés en 5 montés sous les organes de soufflage 4.

Chaque moule 5 comprend deux parties de moule, à savoir une partie de moule fixe 6 et une partie de moule mobile 7 et un fond 8. Chaque partie de moule 6, 7 comporte une empreinte correspondant à la moitié de la forme latérale extérieure du corps de la bouteille, le fond 8 comportant une empreinte correspondant au fond de la bouteille.

Les parties de moule 6, 7 sont montées entre une armature inférieure 9.1 et une armature supérieure 9.2 formant châssis et le fond 8 est monté sous l'armature inférieure 9.1.

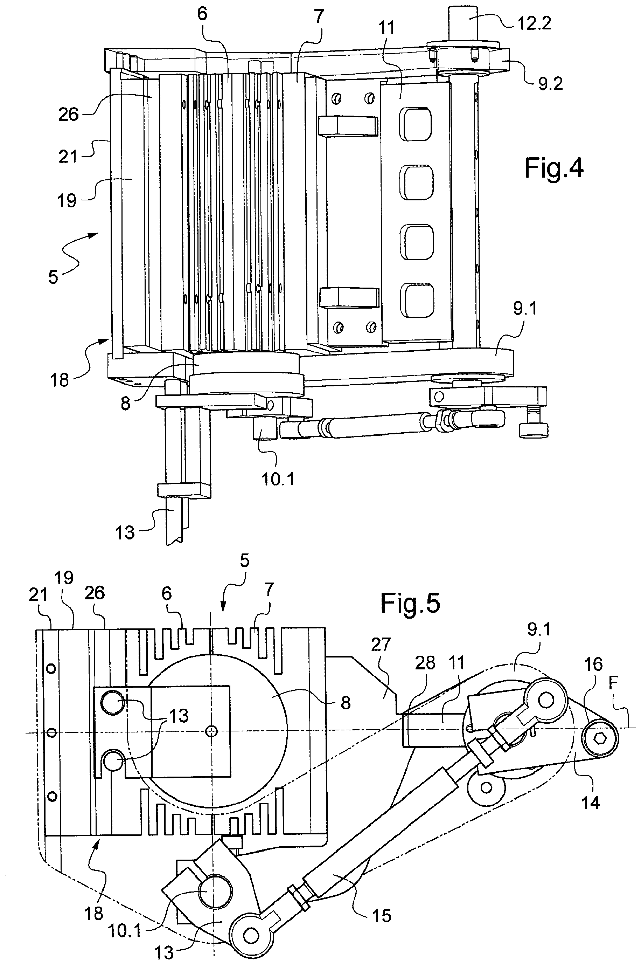

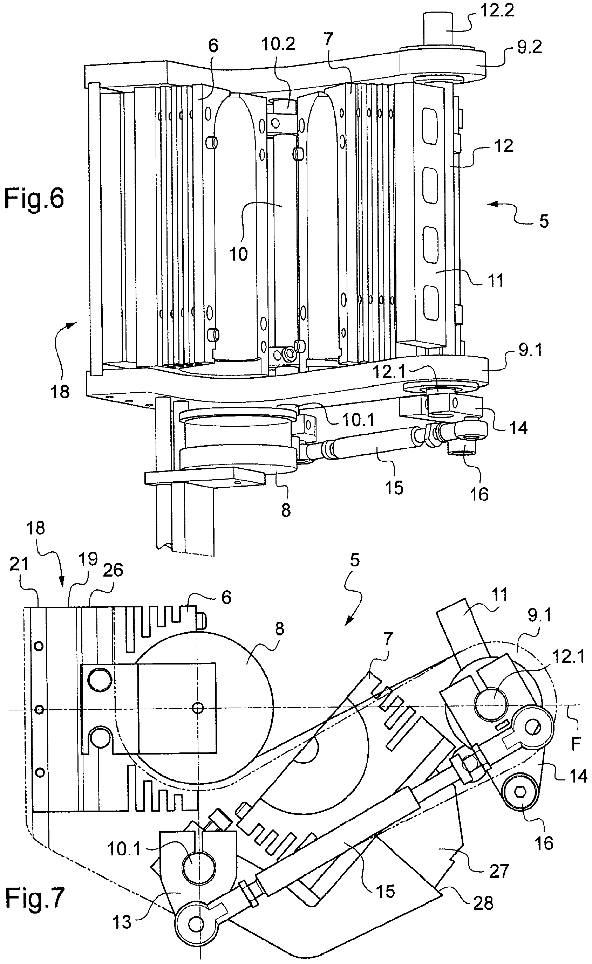

La partie de moule mobile 7 est pourvu d'un renfort 27 ayant un côté solidaire d'un arbre 10 ayant des portions d'extrémité inférieure et supérieure 10.1, 10.2 reçues à pivotement dans les armatures 9.1, 9.2 respectivement. La partie de moule mobile 7 pivote ainsi entre une position fermée (figures 4 et 5) dans laquelle elle s'étend en regard de la partie de moule fixe 6 et une position ouverte (figures 6 et 7) dans laquelle elle est écartée de la partie de moule fixe 6 pour permettre l'introduction de la préforme dans le moule 5 et l'extraction de la bouteille soufflée hors du moule 5.

La partie de moule mobile 7 est associée à un organe de son blocage en position fermée. L'organe de blocage comprend un arc-boutant 11 ayant un côté solidaire d'un arbre de pivotement 12 ayant une portion d'extrémité inférieure 12.1 et une portion d'extrémité supérieure 12.2 reçues à pivotement dans l'armature inférieure 9.1 et l'armature supérieure 9.2 respectivement. L'arc-boutant 11 est ainsi mobile entre une position escamotée (figures 6 et 7) et une position de blocage (figures 4 et 5). Dans la position de blocage, l'arc-boutant 11 s'étend entre la partie de moule mobile 7 et l'arbre de pivotement 12 qui forme un élément de butée solidaire de la plateforme 2 positionné de telle manière que l'arc-boutant 11 en position de blocage s'étende le long d'une direction F (figure 5) d'application d'une résultante d'effort de soufflage repris par la partie de moule mobile 7. En position escamotée, l'arc-boutant 11 s'étant vers l'extérieur de la plateforme 2 selon une direction sensiblement radiale de ladite plateforme 2. L'arc-boutant 11 a ainsi une hauteur sensiblement égale à celle de la partie de moule mobile 7. On notera que le renfort 27 est agencé pour permettre l'appui de l'arc-boutant 11 et la reprise des efforts de soufflage par celui-ci. Le renfort 27 comprend une butée 28 d'arrêt en pivotement de l'arc-boutant 11 dans sa position de blocage.

Le fond 8 est monté sur des colonnes 13 pour coulisser verticalement entre une position fermée ou haute dans laquelle le fond 8 a une portion en appui contre les parties de moule 6, 7 lorsque la partie de moule mobile 7 est fermée (figures 4 et 5) et une position ouverte ou basse (figures 6 et 7) dans laquelle le fond 8 est écarté des parties de moule 6, 7. Lorsque le fond 8 est en position fermée et que la partie de moule mobile 7 est en position fermée, le fond 8 a son bord supérieur prisonnier entre les parties de moule 6, 7 (mieux visible sur la figure 4).

La plateforme 2 est pourvue de moyens de commande des parties de moule mobiles 7 entre leur position fermée et leur position ouverte et des moyens de commande des arcs-boutants 11 entre leur position escamotée et leur position de blocage.

Pour chaque partie de moule mobile 7 et chaque arc-boutant 11 qui lui est associé, les moyens de commande comprennent des manetons 13, 14 fixés respectivement sur les extrémités 10.1, 12.1 des arbres 10, 12 et reliés l'un à l'autre par une bielle 15. La bielle 15 assure la synchronisation des mouvements de l'arc-boutant 11 entre sa position escamotée et sa position de blocage avec les mouvements de la partie de moule mobile 7 entre sa position ouverte et sa position fermée de telle manière que, lorsque la partie de moule mobile 7 est amenée vers sa position fermée, l'arc-boutant 11 est amené vers sa position de blocage et que, lorsque la partie de moule mobile 7 est amenée vers sa position ouverte, l'arc-boutant 11 est amené vers sa position escamotée. Le maneton 14 est en outre pourvu d'un galet 16 coopérant avec une came 17 qui est fixé sur le bâti 1 et s'étend autour de la plateforme 2 pour déplacer le maneton 14, et donc le maneton 13 via la bielle 15, dans ses positions correspondant aux positions escamotée et de blocage de l'arc-boutant 11, et donc dans les positions ouverte et fermée de la partie de moule mobile 7. La came 17 est agencée pour ouvrir les moules dans une zone de chargement des préformes dans les moules 5 et de déchargement des bouteilles soufflées hors des moules 5, et pour fermer et maintenir fermés les moules 5 lorsque, du fait de la rotation de la plateforme 2, les moules 5 ne sont plus dans la zone de chargement et de déchargement.

La plateforme 2 est pourvue de moyens de commande du fond 8 entre sa position ouverte et sa position fermée. Le fond 8 est pourvu d'un galet, non visible sur les figures, coopérant avec une came, non visible sur les figures, qui est fixé sur le bâti 1 et s'étend autour de la plateforme 2 pour déplacer le fond 8 entre ses positions ouverte et fermée.

La partie de moule fixe 6 est montée sur un élément, généralement désigné en 18, de mise en appui de la partie de moule fixe 6 contre la partie de moule mobile 7. L'élément de mise en appui 18 comprend un corps 19 délimitant une chambre 20 qui est fermé à une extrémité par un fond 21 et qui reçoit à coulissement un piston 22 sur lequel est fixée une platine 26 de fixation de la partie de moule fixe 6. La direction de coulissement du piston 22 est parallèle à la direction d'application de la résultante d'effort de soufflage et la partie de moule fixe 6 est solidaire en translation du piston 22. Le fond 21 a des bords supérieur et inférieur reçus dans des rainures ménagées dans les armatures supérieure 9.2 et inférieure 9.1. Entre le corps 19 et le fond 21 s'étend une membrane 23, élastiquement déformable, dont un bord périphérique est pincé entre le corps 19 et le fond 21. Le fond 21 est percé d'un canal d'introduction d'air à la pression de soufflage entre le fond 21 et la membrane 23 de telle manière que l'air provoque un déplacement de la membrane 23 et du piston 21, et donc de la partie de moule fixe 6. Le canal d'introduction est relié par une conduite à la source d'air de soufflage alimentant chaque organe de soufflage 4.

En fonctionnement, la plateforme 2 étant en rotation, le moule 5 est ouvert en regard d'un organe d'amenée d'une préforme dans le moule 5 puis, une fois la préforme chargée dans le moule 5, la came 17 provoque la fermeture du moule 5 en amenant la partie de moule mobile 7 en position de fermeture et l'arc-boutant 11 dans sa position de blocage. Les moyens de commande des parties de moule mobile 7 entre l'état ouvert et l'état fermé et les moyens de commande des fonds 8 entre leur position ouverte et leur position fermée sont bien évidemment synchronisés.

L'air de soufflage est alors introduit dans le moule 5 et simultanément entre la membrane 23 et le fond 21. L'air de soufflage va alors provoquer :
- le déplacement du piston 22 qui va plaquer la partie de moule fixe 6 contre la partie de moule mobile 7 bloquée par l'arc-boutant 11 ;
- le gonflage de la préforme dont la paroi va se plaquer contre la paroi interne du moule 5.

On notera que la course du piston 22 est faible puisque le piston 22 a pour fonction d'éliminer les jeux entre la partie de moule fixe 6 et la partie de moule mobile 7, et entre la partie de moule mobile 7 et l'arc-boutant 11.

Le soufflage se termine lorsque le moule 5 revient en zone de chargement et déchargement. La pression de soufflage est au préalable coupée. La came 17 commande alors l'escamotage de l'arc-boutant 11 et l'ouverture du moule 5. Une pince 24 montée à l'extrémité d'un bras 25 vient ensuite chercher la bouteille soufflée. Le bras 25 est guidé pour faire faire à la pince 24 un mouvement de dégagement permettant de sortir la bouteille soufflée du moule 5 ouvert sans interférer avec la partie de moule mobile 7. Le mouvement de dégagement est donc réalisé dans une direction opposée à la partie de moule mobile 7.

Bien entendu, l'invention n'est pas limitée aux modes de réalisation décrits mais englobe toute variante entrant dans le champ de l'invention telle que définie par les revendications.

En particulier, les moyens de déplacement des arcs-boutants entre leurs deux positions peuvent comprendre un servomoteur au lieu d'une came.

En outre, les moyens de commande des moules dans leurs états ouvert et fermé peuvent comprendre un ou plusieurs servomoteurs au lieu des cames.

Les moyens de commande des arcs-boutants et des parties de moule mobiles peuvent être indépendants les uns des autres.

Le moule peut ne comprendre qu'une partie fixe et une partie mobile.

Les parties de moule peuvent être fixées directement sur la plateforme.

L'arc boutant peut coulisser entre ses deux positions et être reçu, dans sa position de blocage, entre la partie de moule mobile et un élément de butée solidaire de la plateforme ou d'un organe lui-même solidaire de la plateforme.

L'arc-boutant peut prendre appui directement ou indirectement, c'est-à-dire via une pièce intermédiaire, contre la partie de moule mobile.

Le fond 8 peut basculer entre ses deux positions au lieu de coulisser entre lesdites positions.

## Revendications

1. Dispositif de soufflage de récipients, comportant un bâti (1) et une plateforme (2) montée pour pivoter sur le bâti autour d'un axe de rotation (3), la plateforme étant pourvue d'organes de soufflage (4) et de moules (5) qui sont montés sous les organes de soufflage et qui comprennent une partie de moule fixe (6) et une partie de moule mobile (7) déplaçable par des moyens de commande (12, 13) entre une position d'ouverture et une position de fermeture de moule, **caractérisé en ce qu'**il comprend des organes de blocage des moules en état fermé, chaque organe de blocage comprend un arc-boutant (11) monté sur la plateforme pour être mobile entre une position escamotée et une position de blocage dans laquelle l'arc-boutant s'étend entre la partie de moule mobile et un élément de butée solidaire de la plateforme positionné de telle manière que l'arc-boutant s'étende le long d'une direction d'application (F) d'une résultante d'effort de soufflage repris par la partie de moule mobile.

2. Dispositif selon la revendication 1, dans lequel l'élément de butée est un arbre de pivotement (12) de l'arc-boutant (11).

3. Dispositif selon la revendication 2, dans lequel la partie de moule mobile (7) est solidaire d'un arbre de pivotement (10) monté sur la plateforme pour pivoter entre les positions de fermeture et d'ouverture, les moyens de commande comportant une bielle (15) reliant un maneton (13) solidaire de l'arbre de pivotement (10) de la partie de moule mobile et un maneton (14) solidaire de l'arbre de pivotement (12) de l'arc-boutant (11).

4. Dispositif selon la revendication 3, dans lequel les moyens de commande comprennent un galet (16) solidaire de l'un des manetons pour coopérer avec une came (17) fixe par rapport au bâti (1) et conformée pour amener la partie de moule mobile (7) et l'arc-boutant (11) dans leurs deux positions.

5. Dispositif selon la revendication 1, dans lequel les parties de moule (6, 7) et l'arc-boutant (11) sont montés dans un châssis (9) fixé sur la plateforme (2) .

6. Dispositif selon la revendication 1, dans lequel l'arc-boutant (11) a une hauteur sensiblement identique à une hauteur du moule (5).

7. Dispositif selon la revendication 5, dans lequel la partie de moule fixe (6) est montée sur un élément (18) de mise en appui de la partie de moule fixe contre la partie de moule mobile (7).

8. Dispositif selon la revendication 7, dans lequel l'élément de mise en appui (18) comprend un corps (19) recevant, à coulissement dans la chambre selon une direction parallèle à la direction d'application de la résultante d'effort de soufflage, un piston (21) soumis à une pression de soufflage, la partie de moule fixe (6) étant solidaire en translation du piston.

## Patentansprüche

1. Vorrichtung zum Blasformen von Behältern, umfassend ein Gestell (1) und eine Plattform (2), die an dem Gestell drehbar um eine Rotationsachse (3) gelagert ist, wobei die Plattform mit Blaselementen (4) und mit Formen (5) ausgestattet ist, die unter den Blaselementen montiert sind und einen ortfesten Formteil (6) und einen beweglichen Formteil (7) umfassen, der durch Steuermittel (12, 13) zwischen einer geöffneten Position und einer geschlossenen Position der Form verschwenkbar ist, **dadurch gekennzeichnet, dass** sie Blockierelemente zum Blockieren der Formen im geschlossenen Zustand umfasst, wobei jedes Blockierelement eine Strebe (11) umfasst, die an der Plattform gelagert ist, um zwischen einer eingezogenen Position und einer Blockierposition beweglich zu sein, in der sich die Strebe zwischen dem beweglichen Formteil und einem fest mit der Plattform verbundenen Anschlagelement erstreckt, das derart positioniert ist, dass sich die Strebe entlang einer Richtung (F) erstreckt, in der eine Resultierende einer Blaskraft, die von dem beweglichen Formteil aufgenommen wird, angreift.

2. Vorrichtung nach Anspruch 1, bei der das Anschlagelement eine Schwenkwelle (12) der Strebe (11) ist.

3. Vorrichtung nach Anspruch 2, bei der der bewegliche Formteil (7) fest mit einer Schwenkwelle (10) verbunden ist, die an der Plattform gelagert ist, um sich zwischen der geschlossenen und der geöffneten Position zu verschwenken, wobei die Steuermittel eine Stange (15) umfassen, die einen Zapfen (13), der fest mit der Schwenkwelle (10) des beweglichen Formteils verbunden ist, und einen Zapfen (14) verbindet, der fest mit der Schwenkwelle (12) der Strebe (11) verbunden ist.

4. Vorrichtung nach Anspruch 3, bei der die Steuermittel eine Rolle (16) umfassen, die fest mit einem der Zapfen verbunden ist, um mit einem Nocken (17) zusammenzuwirken, der relativ zum Gestell (1) ortsfest und so geformt ist, dass er den beweglichen Formteil (7) und die Strebe (11) in ihre beide Positionen bringt.

5. Vorrichtung nach Anspruch 1, bei der die Formteile (6, 7) und die Strebe (11) in einem Rahmen (9) montiert sind, der an der Plattform (2) befestigt ist.

6. Vorrichtung nach Anspruch 1, bei der die Strebe (11) eine Höhe hat, die im Wesentlichen identisch zu einer Höhe der Form (5) ist.

7. Vorrichtung nach Anspruch 5, bei der der ortsfeste Formteil (6) an einem Anlageelement (18) zum Anlegen des ortsfesten Formteils an dem beweglichen Formteil (7) montiert ist.

8. Vorrichtung nach Anspruch 7, bei der das Anlageelement (18) einen Körper (19) umfasst, der gleitend in der Kammer in eine Richtung parallel zur Richtung des Angreifens der Resultierenden der Blaskraft einen Kolben (21) aufnimmt, der einem Blasdruck ausgesetzt ist, wobei der ortsfeste Formteil (6) translationsfest mit dem Kolben verbunden ist.

## Claims

1. A device for blow-molding containers, the device comprising a structure (1) and a platform (2) mounted to rotate on the structure about an axis of rotation (3), the platform being provided with blower members (4) and with molds (5) that are mounted under the blower members, each of which comprises a stationary mold portion (6) and a movable mold portion (7) that is movable by control means (12, 13) between an open position and a closed position for the mold, the device being **characterized in that** it includes blocking members for blocking the molds in the closed state, each blocking member comprising a strut (11) mounted on the platform to move between a retracted position and a blocking position in which the strut extends between the movable mold portion and an abutment element secured to the platform and positioned in such a manner that the strut extends in a direction (F) along which a resultant of the blow-molding force as taken up by the movable mold portion is applied.

2. A device according to claim 1, wherein the abutment element is a pivot shaft (12) for pivoting the strut (11) .

3. A device according to claim 2, wherein the movable mold portion (7) is secured to a pivot shaft (10) mounted on the platform to pivot between the closed and open positions, the control means including a connecting rod (15) connecting together a crank (13) secured to the pivot shaft (10) of the movable mold portion and a crank (14) secured to the pivot shaft (12) of the strut (11).

4. A device according to claim 3, wherein the control means comprise a wheel (16) secured to one of the cranks in order to co-operate with a cam (17) that is stationary relative to the structure (1) and that is shaped to move the movable mold portion (7) and the strut (11) into their two positions.

5. A device according to claim 1, wherein the mold portions (6, 7) and the strut (11) are mounted in a frame (9) that is fastened on the platform (2).

6. A device according to claim 1, wherein the strut (11) is of a height that is substantially identical to the height of the mold (5).

7. A device according to claim 5, wherein the stationary mold portion (6) is mounted on a presser element (18) for pressing the stationary mold portion against the movable mold portion (7).

8. A device according to claim 7, wherein the presser element (18) comprises a body (19) slidably receiving a piston (22) in a chamber to slide in a direction parallel to the direction in which the resultant of the blow-molding force is applied, the piston (22) being subjected to blow-molding pressure and the stationary mold portion (6) being secured to move in translation with the piston.
